Europäisches Patentamt

European Patent Office

Office européen des brevets

(11) Numéro de publication: **0 467 292 A1**

## DEMANDE DE BREVET EUROPEEN

(21) Numéro de dépôt: **91111851.1**

(22) Date de dépôt: **16.07.91**

(51) Int. Cl.5: **F16K 39/04**, F16K 3/18

(30) Priorité: **16.07.90 FR 9009046**

(43) Date de publication de la demande:
**22.01.92 Bulletin 92/04**

(84) Etats contractants désignés:
**AT BE CH DE DK ES FR GB GR IT LI LU NL SE**

(71) Demandeur: **ALCATEL CIT**
**12 Rue de la Baume**
**F-75008 Paris(FR)**

(72) Inventeur: **Deville, Patrice**
**126, avenue de Genève**
**F-74000 Annecy(FR)**
Inventeur: **Mathieu, Luc**
**1, rue des Cygnes**
**F-74940 Annecy le Vieux(FR)**

(74) Mandataire: **Weinmiller, Jürgen et al**
**Lennéstrasse 9 Postfach 24**
**W-8133 Feldafing(DE)**

(54) **Vanne à tiroir.**

(57) Vanne à tiroir comportant un corps de vanne (1) avec deux ouvertures coaxiales (12, 13) munies de moyens (14, 15) de raccordement à une conduite, une tige de manoeuvre (2), un clapet (10) et un contre-clapet (11), caractérisée en ce que le clapet (10) comporte un évidement (17), débouchant des deux côtés du clapet et équipé d'un piston (18), mobile entre d'un côté une simple butée (19) et de l'autre côté un épaulement (20) de l'évidement, l'appui du piston contre ledit épaulement comportant des moyens d'étanchéité (21), un ressort de rappel (23) poussant ledit piston vers ladite simple butée, ledit piston comportant, du côté de ladite simple butée, des moyens (24) de coopération avec une rampe inclinée (26) de ladite tige de manoeuvre (2) provoquant, lors de la fermeture de la vanne, l'appui du piston contre ledit épaulement (20) de l'évidement.

FIG. 2

La présente invention concerne une vanne à tiroir et s'applique au domaine du vide en particulier pour l'isolement de canalisations.

La présence d'une vanne tiroir dans une canalisation d'une installation de vide nécessite le montage d'une seconde vanne montée en parallèle appelée en général vanne "by-passe".

Ainsi, on connaît un montage dans lequel une vanne à tiroir est accouplée parallèlement à une seconde vanne du type "vanne à gaz" qui permet, avant l'ouverture de la vanne à tiroir, de rétablir un équilibre en pression de part et d'autre du clapet de la vanne à tiroir.

La "vanne gaz" permet ainsi d'éviter une trop grande perturbation moléculaire entre les deux parties préalablement isolées de la canalisation, lors de l'ouverture de la vanne à tiroir.

Ce système qui nécessite la présence de deux vannes est onéreux et exige en outre un raccordement et un montage spécifique pour l'intégration en parallèle de la vanne à gaz dite vanne "by-passe".

La présente invention se propose de pallier cet inconvénient et a pour objet une vanne à tiroir comportant un corps de vanne avec deux ouvertures coaxiales munies de moyens de raccordement à une conduite, une tige de manoeuvre, un clapet et un contre-clapet, caractérisé en ce que le clapet comporte un évidement, débouchant des deux côtés du clapet et équipé d'un piston, mobile entre d'un côté une simple butée et de l'autre côté un épaulement de l'évidement, l'appui du piston contre ledit épaulement comportant des moyens d'étanchéité, un ressort de rappel poussant ledit piston vers ladite simple butée, ledit piston comportant, du côté de ladite simple butée des moyens de coopération avec une rampe inclinée de ladite tige de manoeuvre provoquant, lors de la fermeture de la vanne, l'appui du piston contre ledit épaulement de l'évidement.

Selon une autre caractéristique, la tige de manoeuvre porte un axe transversal de poussée dont chaque extrémité est placée entre une paire de ressorts, un ressort de la paire étant fixé au clapet et l'autre au contre-clapet, ledit axe de poussée assurant dans un premier temps, au cours de la fermeture de la vanne, le déplacement de l'ensemble clapet, contre-clapet jusqu'en butée contre le fond du corps de vanne par appui dudit axe de poussée sur lesdits ressorts et, dans un second temps l'application du clapet et du contre-clapet contre leur siège par compression desdits ressorts sous l'effet de l'avancée dudit axe de poussée entre les deux ressorts de chaque paire, le clapet et le contre-clapet étant munis d'au moins un ressort de rappel, la tige de manoeuvre comportant en outre un ergot d'entraînement qui pénètre dans une lumière du contre-clapet, ledit ergot assurant, lors de l'ouverture de la vanne, le déplacement longitudinal de l'ensemble clapet et contre-clapet après glissement dudit axe de poussée entre les deux ressorts de chaque paire annulant la compression desdits ressorts, et appui dudit ergot d'entraînement contre une extrémité de ladite lumière provoquant le déplacement de l'ensemble.

On va maintenant donner la description d'un exemple de mise en oeuvre de l'invention en se référant au dessin annexé dans lequel :

- La figure 1 montre en coupe partielle une vanne selon l'invention.
- La figure 2 est une vue partielle en coupe montrant la vanne dans sa position fermée.
- La figure 3 est une vue partielle en coupe montrant la vanne dans sa position ouverte.
- Les figures 4 et 5 montrent respectivement les détails repérés IV et V sur les figures 2 et 3.
- Les figures 6 et 7 représentent les clapets et contre-clapets de la vanne avec les ressorts d'application et de rappel, respectivement dans la position ouverte et fermée de la vanne.
- La figure 8 est une vue en perspective éclatée montrant uniquement les ressorts d'application et de rappel des clapets et contre-clapets de la vanne.
- La figure 9 est une vue de gauche de la figure 2 dans laquelle le corps de vanne est en coupe et dans laquelle le clapet a été ôté, ne laissant apparaître que la tige de manoeuvre, les ressorts et le contre-clapet.
- La figure 10 correspond à la figure 9 mais en position ouverte de la vanne, c'est-à-dire correspondant à la figure 3.

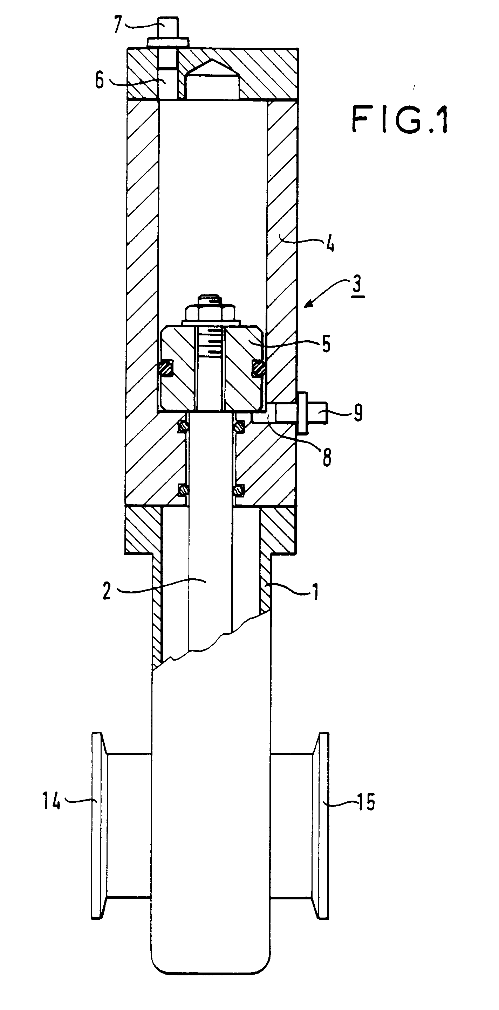

En se reportant à la figure 1, on voit une vanne à tiroir selon l'invention. Cette vanne se compose essentiellement de deux parties : la vanne proprement dite située à la partie inférieure de la figure et dont on ne voit sur cette figure que le corps de vanne 1 et la tige de manoeuvre 2, et le vérin de commande 3 lié au corps de vanne 1 et situé à la partie supérieure de la figure. Le vérin de commande 3 comporte un cylindre 4 et un piston 5 lié à la tige de commande 2. Le cylindre 4 du vérin comporte à son extrémité supérieure un premier orifice 6 muni d'un embout de liaison 7 à un raccord pour un fluide de commande pour la fermeture de la vanne. Le cylindre 4 comporte en outre un second orifice 8 muni d'un embout de liaison 9 pour son raccordement à un raccord pour un fluide de commande pour l'ouverture de la vanne.

Sur les autres figures, le vérin de commande 3 n'est plus représenté, l'invention se situant dans la vanne proprement dite dont la partie inférieure de la figure 1 ne montre que l'extérieur.

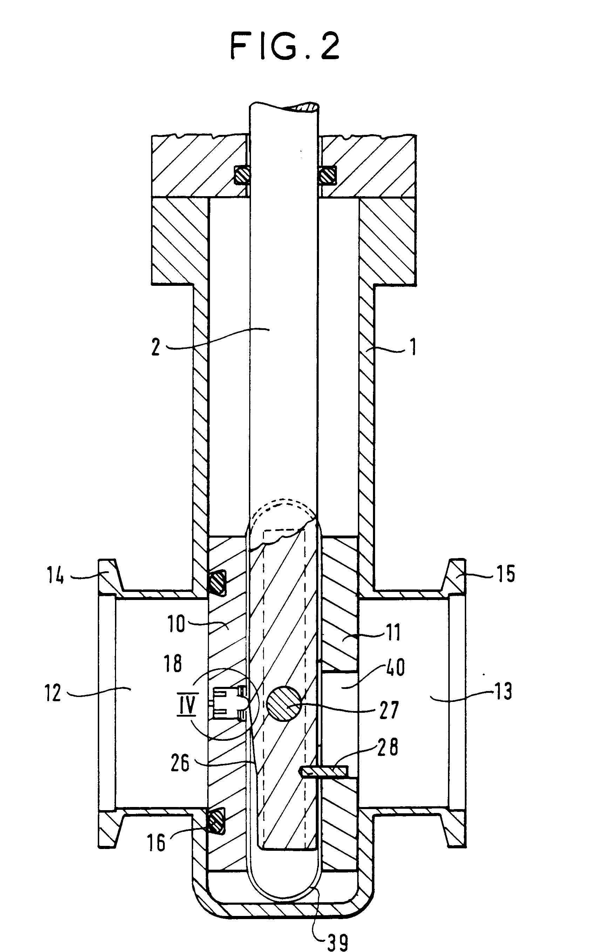

La figure 2 montre la vanne en position fermée.

Sur cette figure, outre la tige de manoeuvre 2, on voit le clapet de fermeture 10 ainsi qu'un contre-clapet 11.

Le corps de vanne 1 comporte deux ouvertures coaxiales 12 et 13 équipées de brides 14 et 15 pour le raccordement à une conduite. Le clapet 10 est muni d'un joint d'étanchéité torique 16.

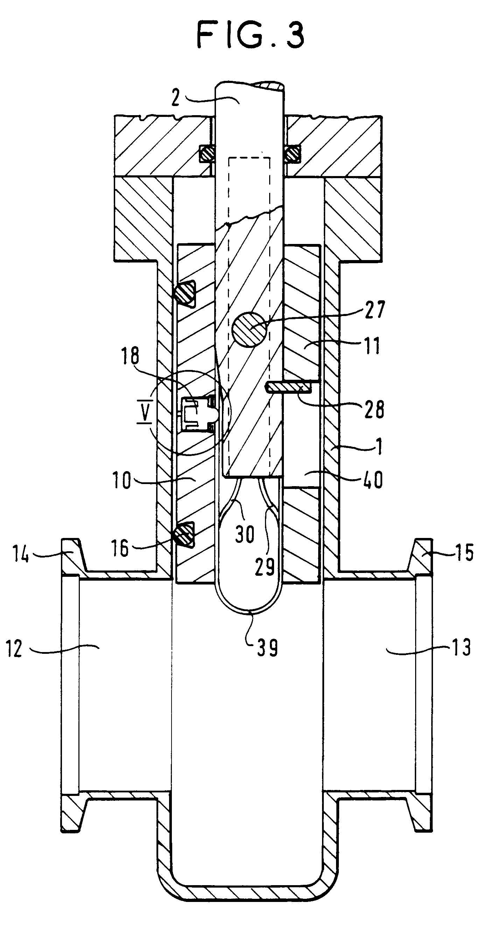

Sur la figure 3, la vanne est représentée en position ouverte.

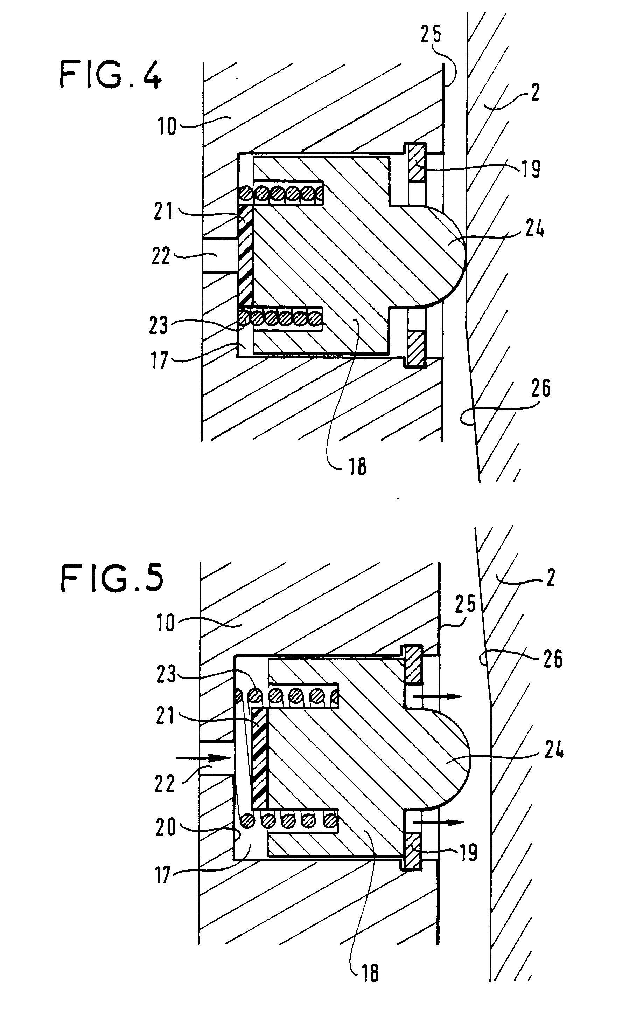

Le clapet 10 est équipé d'un système de "by-passe" repéré IV et V sur les figures 2 et 3 et représenté en détail agrandi sur les figures 4 et 5 respectivement en position fermé et ouvert.

A cet effet le clapet 10 comporte un évidement 17 qui débouche des deux côtés du clapet 10. Cet évidement est équipé d'un piston 18 mobile entre une simple butée 19 constituée par un circlip et un épaulement 20 de l'évidement. Du côté de l'épaulement 20, le piston 18 est muni d'un joint plat 21 assurant, lorsque le piston 18 est plaqué contre l'épaulement 20, la fermeture étanche de l'orifice 22 de débouchement de l'évidement 17. En position de repos, le piston 18 est plaqué contre la butée 19 par un ressort de rappel 23. Du côté opposé au joint plat 21, le piston 18 comporte une protubérance 24 qui dépasse la face interne 25 du clapet 10 et coopère avec une rampe inclinée 26 de la tige de manoeuvre 2. Lors de la descente de la tige de manoeuvre 2, c'est-à-dire lors de la fermeture de la vanne, la rampe inclinée 26 repousse le piston 18 jusqu'à l'obturation de l'orifice 22 par le joint plat 21 du piston.

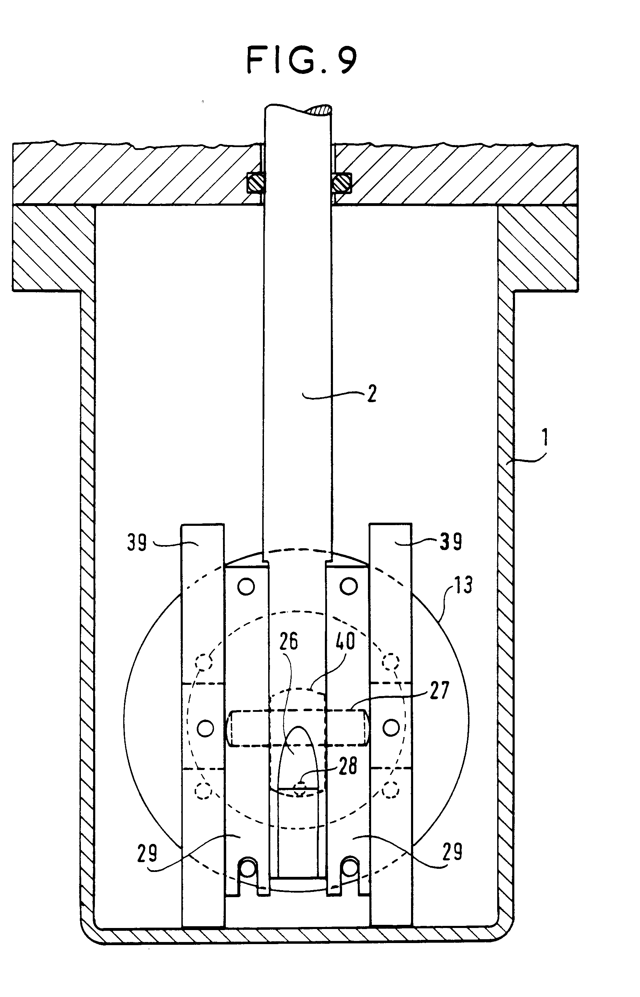

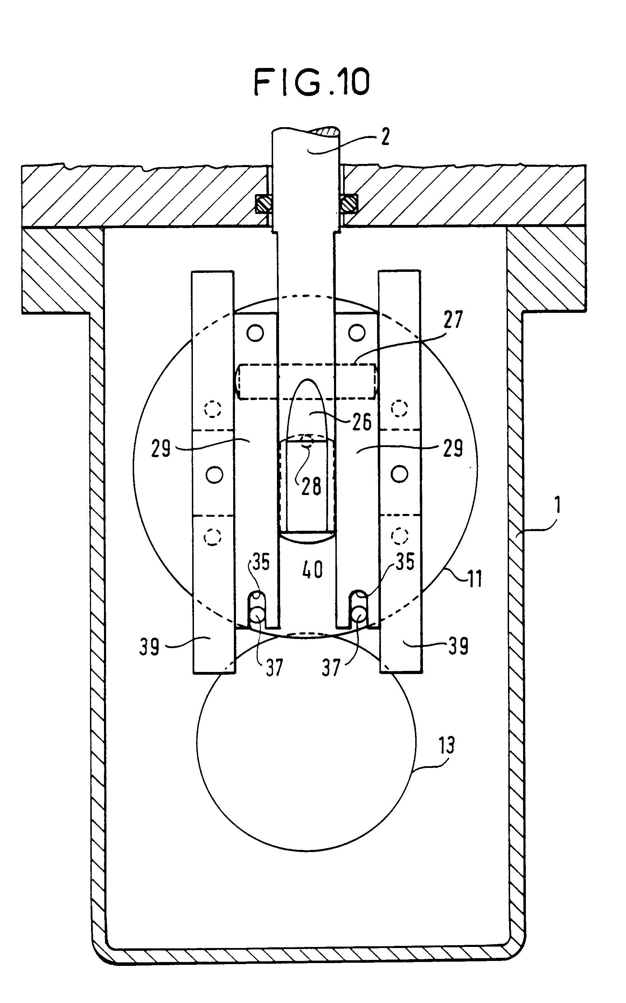

La tige de manoeuvre 2 comporte d'une part un axe transversal de poussée 27 visible en section sur les figures 2, 3, 6, 7 et selon sa longueur sur les figures 9 et 10 et d'autre part un ergot d'entraînement 28 que l'on voit en coupe axiale sur les figures 2 et 3 et en bout (en vue cachée en pointillé) sur les figures 9 et 10.

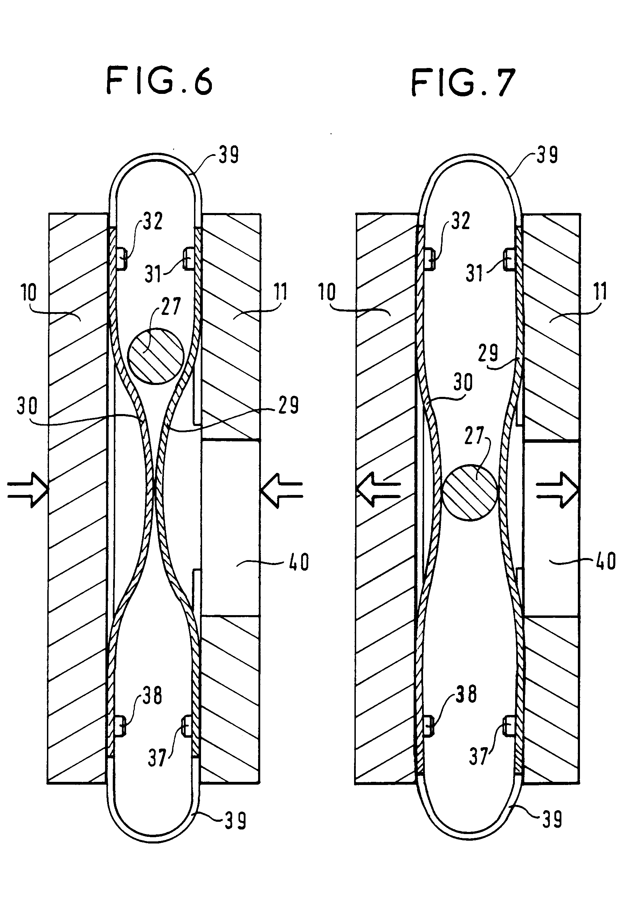

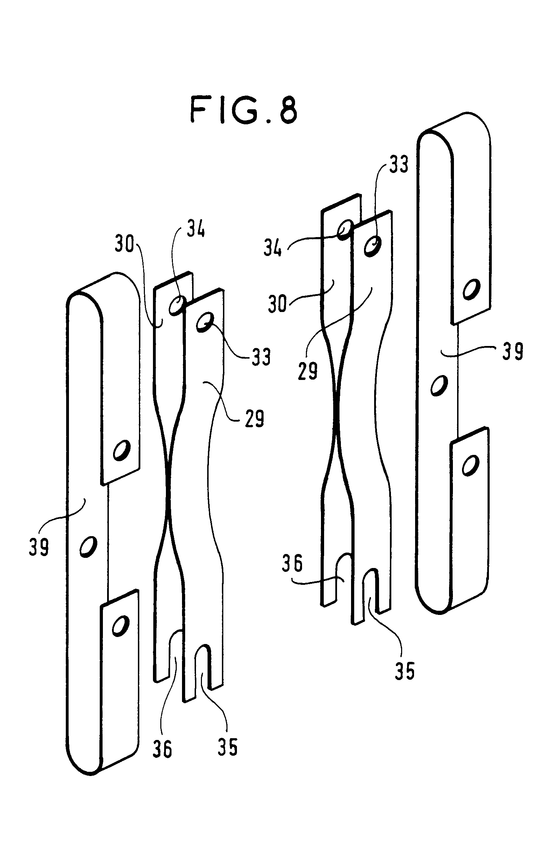

L'axe de poussée 27 a pour fonction d'une part, lors de la fermeture de la vanne, d'entraîner ver le bas l'ensemble du clapet 10 et du contre-clapet 11 par appui de l'axe 27 contre deux paires de ressorts de poussée 29, 30 (figures 6, 7, 8) liés au clapet et au contre-clapet par une de leurs extrémités par des pions 31, 32 qui passent dans des trous 33, 34 des ressorts et qui coulissent librement à leur autre extrémité par une lumière oblongue 35, 36 contre des pions 37, 38, et d'autre part, lorsque l'ensemble est en butée basse contre le fond du corps de vanne 11, comme on le voit sur les figures 2 et 9, la poursuite de la descente de la tige de manoeuvre 2 provoque la pénétration de l'axe de poussée 27 entre les deux paires de ressorts 29, 30 comme on le voit sur la figure 7 réalisant ainsi l'application du clapet 10 et du contre-clapet 11 contre leur siège. Le clapet 10 et le contre-clapet 11 sont en outre munis d'une paire de ressorts de rappel 39.

L'ergot d'entraînement 28 a pour fonction lors de l'ouverture de la vanne d'entraîner vers le haut l'ensemble clapet et contre-clapet par butée de cet ergot 28 contre l'extrémité supérieure d'une lumière 40 pratiquée dans le contre-clapet 11. Au début de la montée de la tige de manoeuvre 2, l'ensemble clapet, contre-clapet reste en position basse, la rampe inclinée 26 de la tige glisse contre le piston 18 qui se translate vers la droite libérant l'orifice 22, pendant le même temps, l'axe de poussée 27 se dégage des ressorts 29, 30. Lorsque l'ergot 28 arrive en butée à l'extrémité supérieure de la lumière 40, l'axe de poussée 27 est complètement dégagé des ressorts de poussée 29, 30 et les ressorts de rappel 39 permettent alors au clapet et au contre-clapet de s'écarter de leur siège et de remonter sans frottement jusqu'au dégagement complet des ouvertures 12 et 13.

Lors de la fermeture de la vanne, l'axe de poussée 27 entraîne sans frottement vers le bas l'ensemble clapet, contre-clapet comme il a été dit plus haut par appui de l'axe 27 contre les ressorts 29, 30 mais sans les écarter, l'ensemble n'offrant aucune résistance à la descente et ce n'est que lorsque les ressorts de rappel 39 butent contre le fond du corps 1 (figure 9) que l'axe 27 poursuit sa course avec la tige de manoeuvre 2 et vient comprimer les ressorts à lame 29, 30. C'est également au cours de cette phase que la rampe inclinée 26 vient repousser le piston 18 au fond de son évidement 17 plaquant le joint plat 31 contre l'épaulement 20 et obstruant ainsi d'une manière étanche l'orifice 22.

Comme on le voit, lors de l'ouverture de la vanne, dans une première phase, avant que le clapet et le contre-clapet ne s'écartent de leur siège, le piston 18 libère l'orifice 22 permettant ainsi un équilibre des pressions des deux côtés de la canalisation avant l'ouverture de la vanne.

**Revendications**

1. Vanne à tiroir comportant un corps de vanne (1) avec deux ouvertures coaxiales (12, 13) munies de moyens (14, 15) de raccordement à une conduite, une tige de manoeuvre (2), un clapet (10) et un contre-clapet (11), caractérisée en ce que le clapet (10) comporte un évidement (17), débouchant des deux côtés du clapet et équipé d'un piston (18), mobile entre d'un côté une simple butée (19) et de l'autre côté un épaulement (20) de l'évidement, l'appui du piston contre ledit épaulement comportant des moyens d'étanchéité (21), un ressort de rappel (23) poussant ledit piston vers ladite simple butée, ledit piston comportant, du côté de ladite simple butée, des moyens (24) de coopération avec une rampe inclinée (26) de ladite tige de manoeuvre (2) provoquant, lors de la fermeture de la vanne, l'appui du piston contre ledit épaulement (20) de l'évidement.

2. Vanne à tiroir selon la revendication 1, caractérisée en ce que la tige de manoeuvre porte un axe transversal de poussée (27) dont chaque extrémité est placée entre une paire de ressorts (29, 30), un ressort (30) de la paire étant fixé au clapet (10) et l'autre (29) au contre-clapet (12), ledit axe de poussée (27) assurant dans un premier temps, au cours de la fermeture de la vanne, le déplacement de l'ensemble clapet (10), contre-clapet (11) jusqu'en butée contre le fond du coprs de vanne (1) par appui dudit axe de poussée (27) sur lesdits ressorts (29, 30) et, dans un second temps, l'application du clapet et du contre-clapet contre leur siège par compression desdits ressorts sous l'effet de l'avancée dudit axe de poussée (27) entre les deux ressorts de chaque paire, le clapet et le contre-clapet étant munis d'au moins un ressort de rappel (39), la tige de manoeuvre comportant en outre un ergot d'entraînement (28) qui pénètre dans une lumière (40) du contre-clapet (11), ledit ergot assurant, lors de l'ouverture de la vanne, le déplacement longitudinal de l'ensemble clapet, contre-clapet après glissement dudit axe de poussée 27 entre les deux ressorts de chaque paire annulant la compression desdits ressorts, et appui dudit ergot d'entraînement (28) contre une extrémité de ladite lumière (40) provoquant le déplacement de l'ensemble.

FIG.1

# FIG. 2

# FIG. 3

FIG.4

FIG.5

EP 0 467 292 A1

# FIG.6

# FIG.7

9

# FIG.8

# FIG. 9

# FIG.10

**Office européen
des brevets**

**RAPPORT DE RECHERCHE
EUROPEENNE**

Numéro de la demande

**EP 91 11 1851**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 806 737 (ZIKESCH)<br>* revendications 1, 2; figure 1 *<br>— — — | 1 | F 16 K 39/04<br>F 16 K 3/18 |
| A | DE-B-1 227 297 (BOLL & KIRCH FILTERBAU)<br>* figure 1 *<br>— — — | 1 | |
| A | US-A-2 670 752 (LAURENT)<br>* figures 4, 5 *<br>— — — | 1 | |
| A | DE-C-681 510 (POLTE)<br>* revendication 1; figure 1 *<br>— — — | 1 | |
| A | DE-C-430 606 (POLTE)<br>* figures 2, 4 *<br>— — — | 1 | |
| A | DE-A-1 945 901 (SCHERTLER)<br>* figures 1, 2 *<br>— — — | 2 | |
| A | DE-A-3 028 786 (BALZERS HOCHVAKUUM)<br>* page 5, lignes 6 - 10; figure 6 *<br>— — — — — | 2 | |

DOMAINES TECHNIQUES
RECHERCHES (Int. Cl.5)

F 16 K

Le présent rapport de recherche a été établi pour toutes les revendications

| Lieu de la recherche | Date d'achèvement de la recherche | Examinateur |
|---|---|---|
| Berlin | 01 octobre 91 | SCHLABBACH M |

CATEGORIE DES DOCUMENTS CITES
X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons

& : membre de la même famille, document
correspondant